(19) Europäisches Patentamt
European Patent Office
Office européen des brevets

(11) EP 2 966 418 A1

(12) EUROPEAN PATENT APPLICATION

(43) Date of publication:
13.01.2016 Bulletin 2016/02

(51) Int Cl.:
G01F 1/68 (2006.01)    G01F 1/86 (2006.01)

(21) Application number: 14176813.5

(22) Date of filing: 11.07.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALSTOM Technology Ltd
5400 Baden (CH)

(72) Inventors:
• Lang, Wolfgang
79787 Lauchringen (DE)

• Zinn, Hanspeter
5406 Baden-Ruetihof (CH)
• Gasser-Pagani, Maria-Belen
5400 Baden (CH)

(74) Representative: General Electric Technology
GmbH
CHTI Intellectual Property
Brown Boveri Strasse 7
5400 Baden (CH)

(54) **Method for measuring the mass flow of a stream of a gaseous medium and fuel supply system for conducting the method**

(57) A method is provided for measuring the mass flow (M1-Mx) of a stream of a gaseous medium of elevated first temperature (T2) flowing through a specific pipe (F1-Fx), comprising the steps of:

a) providing a reference stream of said gaseous medium with a known mass flow (M$_{ref}$) and a second temperature (T1) being substantially lower than said first temperature;

b) mixing said reference stream with said stream of a gaseous medium of elevated first temperature (T2) flowing through said specific pipe (F1-Fx);

c) measuring the resulting temperature (T31-T3x) of the mixture of said reference stream and said stream of a gaseous medium of elevated first temperature (T2) flowing through said specific pipe (F1-Fx); and

d) determining the unknown mass flow of said stream of a gaseous medium of elevated first temperature (T2) flowing through said specific pipe (F1-Fx) from the known mass flow (M$_{ref}$) of said reference stream, said elevated first temperature (T2), said second temperature (T1) of said reference stream and said measured resulting temperature (T31-T3x) according to the formula:

$$Mx = M_{ref} \frac{(T1 - T3x)}{(T3x - T2)},$$ where Mx is the unknown mass flow, M$_{ref}$ is the known mass flow of said reference stream, T1 is the second temperature, T2 is the elevated first temperature, and T3x is the resulting temperature after mixing.

Fig.1

EP 2 966 418 A1

**Description**

BACKGROUND OF THE INVENTION

The present invention relates to the measurement of mass flows in general and the technology of gas turbines in particular. It refers to a method for measuring the mass flow of a stream of a gaseous medium according to the preamble of claim 1.

It further refers to a fuel supply system, especially for a gas turbine, for conducting the method.

PRIOR ART

Typically flow measurement devices creating a pressure difference, like orifices or pitot tubes, are used to measure gas (volume) flow at high gas temperatures. The mass flow is calculated by additional measurement of the gas density parameters. However, the overall accuracy of that gas mass flow is lower than 1.2%, typically.

Direct mass flow measurement with Coriolis flowmeters is possible up to high gas temperatures. For an accurate gas flow measurement at high gas temperatures the flowmeter has to be calibrated at zero flow condition at the condition of high gas temperature. If this zero flow adjustment cannot be done due to limitations by operation the overall gas mass flow accuracy gets worse at high gas temperatures.

Measuring fuel gas mass flow directly at elevated or high gas temperatures (>200°C) with high precision is difficult with existing flowmeters because the high gas temperature either causes a restriction on the measurement technique (e.g. turbine wheel counter) or requires several corrections/calibrations of the measured value which decreases the overall accuracy.

SUMMARY OF THE INVENTION

It is an object of the present invention to provide a method for measuring the mass flow of a stream of a gaseous medium of elevated first temperature, which is easy to apply and allows a measurement with high precision.

It is a further object to provide a fuel supply system for a gaseous fuel for conducting said method.

These and other objects are obtained by a method according to Claim 1 and a fuel supply system according to Claim 6.

The inventive method for measuring the mass flow of a stream of a gaseous medium of elevated first temperature flowing through a specific pipe, comprises the steps of:

a) providing a reference stream of said gaseous medium with a known mass flow and a second temperature being substantially lower than said first temperature;
b) mixing said reference stream with said stream of a gaseous medium of elevated first temperature flowing through said specific pipe;
c) measuring the resulting temperature of the mixture of said reference stream and said stream of a gaseous medium of elevated first temperature flowing through said specific pipe; and
d) determining the unknown mass flow of said stream of a gaseous medium of elevated first temperature flowing through said specific pipe from the known mass flow of said reference stream, said elevated first temperature, said second temperature of said reference stream and said measured resulting temperature according to the formula:

$$Mx = M_{ref} \frac{(T1 - T3x)}{(T3x - T2)}$$ , where Mx is the unknown mass flow, $M_{ref}$ is the known mass flow of said reference stream, T1 is the second temperature, T2 is the elevated first temperature, and T3x is the resulting temperature after mixing.

An embodiment of the inventive method is characterized in that said stream of a gaseous medium of elevated first temperature is part of an initial stream supplied at an initial temperature, which is substantially lower than said first temperature and is then heated to said first temperature by means of a preheater.

Specifically, said initial temperature is equal to said second temperature, that said reference stream is diverted from said initial stream supplied at said second temperature, and the mass flow of said reference stream is measured by means of a flowmeter, especially of the Coriolis type.

Specifically, a plurality of parallel specific pipes is provided, whereby each of said specific pipes conducts a respective stream of a gaseous medium of elevated first temperature being part of an initial stream supplied at an initial temperature, which is substantially lower than said first temperature and is then heated to said first temperature by means of a preheater, and said reference stream is admixed to said plural specific pipes by means of related shutoff valves.

Another embodiment of the inventive method is characterized in that said gaseous medium is a gaseous fuel, and that said specific pipe is part of a fuel supply system, especially of a gas turbine.

The inventive fuel supply system, especially for a gas turbine, for conducting the method according to the invention comprises a fuel supply line with a fuel preheater, which fuel supply line branches into a plurality of fuel pipes downstream of said preheater.

It is characterized in that a reference mass flow pipe is connected to said fuel supply line upstream of said fuel preheater, that a flowmeter is provided in said reference mass flow pipe, and that said reference mass flow pipe can be selectively connected to said fuel pipes downstream of said flowmeter by means of respective shutoff valves.

An embodiment of the inventive fuel supply system is characterized in that temperature sensors are provided to measure said elevated first temperature, said second temperature of said reference stream and the resulting temperatures after mixing, and that said temperature sensors and said flowmeter are connected to a measuring unit for determining the unknown mass flows.

BRIEF DESCRIPTION OF THE DRAWINGS

The present invention is now to be explained more closely by means of different embodiments and with reference to the attached drawings.

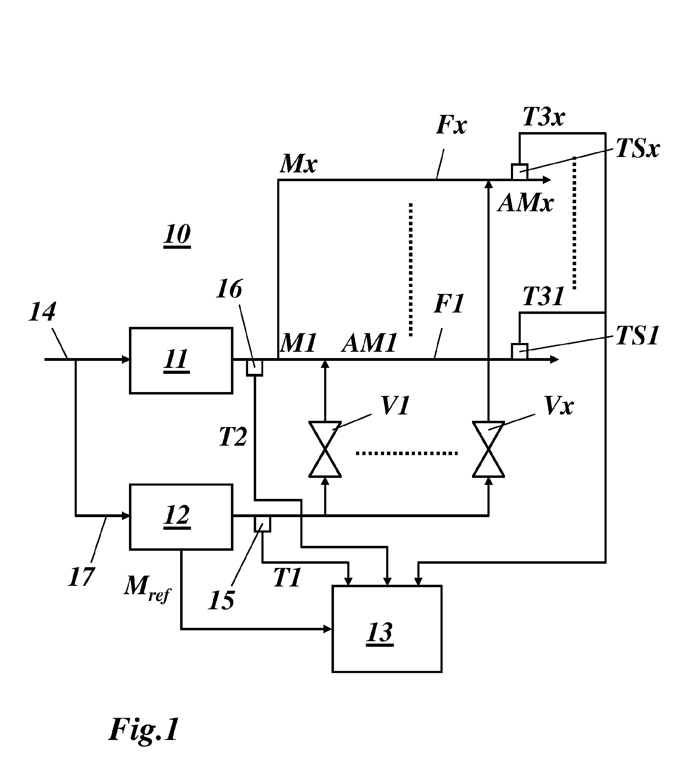

Fig. 1    shows a schematic diagram of a fuel supply system according to an embodiment of the invention.

DETAILED DESCRIPTION OF DIFFERENT EMBODIMENTS OF THE INVENTION

The basic idea of the invention is to determine a gas mass flow from measurement of gas temperature before and after mixing a small known reference mass flow with the unknown preheated gas flow of elevated temperature. The method of the invention can be applied to multiple gas flows and can reduce costs significantly.

Fig. 1 shows a schematic diagram of a fuel supply system according to an embodiment of the invention. The fuel supply system 10 of Fig. 1 comprises a fuel supply line 14 for a gaseous fuel. The fuel flowing through said fuel supply line 14 enters a fuel preheater 11, which heats the fuel to an elevated temperature of > 200°C. Fuel supply line 14 branches into a plurality of x (x=2, 3, 4,...) fuel pipes F1-Fx downstream of preheater 11. A reference mass flow pipe 17 is connected to fuel supply line 14 upstream of fuel preheater 11, so that part of the incoming fuel flows into reference mass flow pipe 17 without being heated. A flowmeter 12 is provided in reference mass flow pipe 17, which measures the mass flow of the fuel running through reference mass flow pipe 17.

Reference mass flow pipe 17 can be selectively connected to each of said fuel pipes F1-Fx downstream of flowmeter 12 by means of respective (controllable) shutoff valves V1-Vx. When one of shutoff valves V1-Vx is opened, the reference mass flow is admixed to the flow of preheated fuel flowing through the related fuel pipe F1-Fx. As the preheated fuel has an elevated temperature T2 compared to the temperature T1 of the not-preheated reference mass flow, the mixture of both flows results in a respective fuel temperature after mixing of T31-T3x.

Various temperature sensors 15, 16 and TS1-TSx are provided to measure the elevated temperature T2 of the fuel after preheating, temperature T1 of said reference stream, and the resulting temperatures T31-T3x after mixing. Temperature sensors 15, 16; TS1-TSx and flowmeter 12 are connected to a measuring unit 13 for determining the unknown mass flows.

Thus, the system mainly consists of a gas supply (14) where a gas preheater 11 is increasing the gas temperature before the gas is further distributed into one ore more branches or fuel pipes F1-Fx. A small amount of the supplied gas flow is extracted upstream of the gas preheater 11 as shown in the attachment. The low gas temperature T1 (before preheating) and the mass flow $M_{ref}$ of that reference gas in reference mass flow pipe 17 are measured precisely using precision resistance temperature detector (RTD) sensor 15 for gas temperature and a Coriolis sensor for mass flow.

The reference mass flow pipe 17 is then connected via individual shutoff valve V1-Vx to each gas pipe F1-Fx after preheater 11, where a gas mass flow measurement is required. For the gas pipe where a mass flow measurement is carried out the shutoff valve is fully opened and the reference gas with mass flow $M_{ref}$ and temperature T1 mixes with the unknown gas mass flow M1-Mx and the gas temperature T2 resulting in added gas mass flow AM1-AMx with a lower mixing gas temperature T31-T3x.

The gas temperatures T2 and T31-T3x are all measured using precision RTD sensors (16 and TS1-TSx).

Based on the 1st thermodynamic law and the assumption that the heat capacity is identical on all positions of the fuel system 10 the unknown gas mass flow Mx can be calculated as:

$$Mx = M_{ref} \frac{(T1 - T3x)}{(T3x - T2)}$$

The final mass flow AM1-AMx in fuel pipes F1-Fx is then

$$AMx = Mx + M_{ref}$$

The accuracy of this gas mass flow depends now on the accuracy of the temperature measurements and the reference mass flow.

The reference mass flow can be measured as accurate as 0.3% and the accuracy of a RTD sensor can be better than 0.1 K resulting in an overall gas mass flow accuracy between 0.5% and 1%.

Advantages:

• The mass flow of the reference gas is measured at low gas temperature and therefore very accurate.

- Another advantage of the invention is that only a small mass flow is extracted and the measurement therefore can be done with a small Coriolis flowmeter (also saving space in small containers).
- A further advantage is that only one flowmeter is needed to measure several gas distribution pipes which results in a very cost effective measurement.
- As the measurements on the hot gas side only require temperature measurements the gas preheating temperature is not limited.

LIST OF REFERENCE NUMERALS

| 10 | fuel supply system |
| 11 | fuel preheater |
| 12 | flowmeter (e.g. of the Coriolis type) |
| 13 | measuring unit |
| 14 | fuel supply line |
| 15,16 | temperature sensor |
| 17 | reference mass flow pipe |
| F1-Fx | fuel pipe |
| M1-Mx | mass flow in fuel distribution line F1-Fx |
| $M_{ref}$ | reference mass flow |
| T1 | fuel temperature in reference mass flow pipe 17 |
| T2 | fuel temperature after preheating |
| T31-T3x | fuel temperature after mixing |
| TS1-TSx | temperature sensor |
| V1-Vx | shutoff valve |

**Claims**

1. Method for measuring the mass flow (M1-Mx) of a stream of a gaseous medium of elevated first temperature (T2) flowing through a specific pipe (F1-Fx), comprising the steps of:

   a) providing a reference stream of said gaseous medium with a known mass flow ($M_{ref}$) and a second temperature (T1) being substantially lower than said first temperature;
   b) mixing said reference stream with said stream of a gaseous medium of elevated first temperature (T2) flowing through said specific pipe (F1-Fx);
   c) measuring the resulting temperature (T31-T3x) of the mixture of said reference stream and said stream of a gaseous medium of elevated first temperature (T2) flowing through said specific pipe (F1-Fx); and
   d) determining the unknown mass flow of said stream of a gaseous medium of elevated first temperature (T2) flowing through said specific pipe (F1-Fx) from the known mass flow ($M_{ref}$) of said reference stream, said elevated first temperature (T2), said second temperature (T1) of said reference stream and said measured resulting temperature (T31-T3x) according to the formula: $Mx = M_{ref} \dfrac{(T1 - T3x)}{(T3x - T2)}$, where

Mx is the unknown mass flow, $M_{ref}$ is the known mass flow of said reference stream, T1 is the second temperature, T2 is the elevated first temperature, and T3x is the resulting temperature after mixing.

2. Method as claimed in Claim 1, **characterized in that** said stream of a gaseous medium of elevated first temperature (T2) is part of an initial stream supplied at an initial temperature, which is substantially lower than said first temperature (T2) and is then heated to said first temperature (T2) by means of a preheater (11).

3. Method as claimed in Claim 2, **characterized in that** said initial temperature is equal to said second temperature (T1), that said reference stream is diverted from said initial stream supplied at said second temperature (T1), and that the mass flow of said reference stream is measured by means of a flowmeter (12), especially of the Coriolis type.

4. Method as claimed in Claim 2, **characterized in that** a plurality of parallel specific pipes (F1-Fx) is provided, whereby each of said specific pipes (F1-Fx) conducts a respective stream of a gaseous medium of elevated first temperature (T2) being part of an initial stream supplied at an initial temperature, which is substantially lower than said first temperature (T2) and is then heated to said first temperature (T2) by means of a preheater (11), and that said reference stream is admixed to said plural specific pipes (F1-Fx) by means of related shutoff valves (V1-Vx).

5. Method as claimed in Claim 1, **characterized in that** said gaseous medium is a gaseous fuel, and that said specific pipe (F1-Fx) is part of a fuel supply system, especially of a gas turbine.

6. Fuel supply system (10), especially for a gas turbine, for conducting the method according to one of the Claims 1 to 5, comprising a fuel supply line (14) with a fuel preheater (11), which fuel supply line (14) branches into a plurality of fuel pipes (F1-Fx) downstream of said preheater (11), **characterized in that** a reference mass flow pipe (17) is connected to said fuel supply line (14) upstream of said fuel preheater (11), that a flowmeter (12) is provided in said reference mass flow pipe (17), and that said reference mass flow pipe (17) can be selectively connected to said fuel pipes (F1-Fx) downstream of said flowmeter (12) by means of respective shutoff valves (V1-Vx).

7. Fuel supply system as claimed in Claim 6, **characterized in that** temperature sensors (15, 16; TS1-TSx) are provided to measure said elevated first temperature (T2), said second temperature (T1) of said reference stream and the resulting temperatures (T31-T3x) after mixing, and that said temperature sensors (15, 16; TS1-TSx) and said flowmeter (12) are connected to a measuring unit (13) for determining the unknown mass flows.

**Fig.1**

Europäisches
Patentamt

European
Patent Office

Office européen
des brevets

# EUROPEAN SEARCH REPORT

Application Number

EP 14 17 6813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S56 163414 A (TOKYO SHIBAURA ELECTRIC CO) 16 December 1981 (1981-12-16)<br>* figure 2 *<br>* equation 1 * | 1-5 | INV.<br>G01F1/68<br>G01F1/86 |
| X | US 2014/130723 A1 (CONRADS HANS GEORG [DE] ET AL) 15 May 2014 (2014-05-15) | 6 | |
| A | * figure 1 *<br>* paragraph [0049] * | 4 | |
| A | US 2014/123742 A1 (MATSUYAMA TAKASHI [JP]) 8 May 2014 (2014-05-08)<br>* figure 1 *<br>* abstract *<br>* paragraph [0023] * | 3,7 | |
| A | EP 0 635 673 A1 (ORMAT IND LTD [IL]) 25 January 1995 (1995-01-25)<br>* figure 2H * | 5 | |
| A | JP H08 94019 A (TOKYO GAS CO LTD) 12 April 1996 (1996-04-12)<br>* figure 8 * | 1-7 | TECHNICAL FIELDS SEARCHED (IPC)<br><br>G01F<br>F02C |
| A | EP 0 030 253 A2 (WESTINGHOUSE ELECTRIC CORP [US]) 17 June 1981 (1981-06-17)<br>* abstract *<br>* figure 1 *<br>* equation 2 * | 1-7 | |
| A | US 2 605 709 A (ALBERT JUBB) 5 August 1952 (1952-08-05)<br>* figure 1 * | 1-7 | |

The present search report has been drawn up for all claims

| Place of search | Date of completion of the search | Examiner |
|---|---|---|
| The Hague | 17 December 2014 | Rambaud, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 2 966 418 A1

### ANNEX TO THE EUROPEAN SEARCH REPORT
### ON EUROPEAN PATENT APPLICATION NO.

EP 14 17 6813

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2014

| Patent document cited in search report | | | Publication date | Patent family member(s) | | Publication date |
|---|---|---|---|---|---|---|
| JP S56163414 | A | | 16-12-1981 | NONE | | |
| US 2014130723 | A1 | | 15-05-2014 | AU | 2012283555 A1 | 23-01-2014 |
| | | | | CA | 2841642 A1 | 17-01-2013 |
| | | | | CL | 2014000058 A1 | 08-08-2014 |
| | | | | CN | 103827584 A | 28-05-2014 |
| | | | | DE | 102012014260 A1 | 17-01-2013 |
| | | | | EP | 2742287 A1 | 18-06-2014 |
| | | | | JP | 2014525024 A | 25-09-2014 |
| | | | | KR | 20140049552 A | 25-04-2014 |
| | | | | US | 2014130723 A1 | 15-05-2014 |
| | | | | WO | 2013007239 A1 | 17-01-2013 |
| US 2014123742 | A1 | | 08-05-2014 | JP | 2014092459 A | 19-05-2014 |
| | | | | US | 2014123742 A1 | 08-05-2014 |
| EP 0635673 | A1 | | 25-01-1995 | CA | 2128349 A1 | 23-01-1995 |
| | | | | EP | 0635673 A1 | 25-01-1995 |
| | | | | IL | 110362 A | 29-06-2000 |
| | | | | JP | H07167398 A | 04-07-1995 |
| | | | | NO | 942732 A | 23-01-1995 |
| | | | | US | 5606858 A | 04-03-1997 |
| JP H0894019 | A | | 12-04-1996 | JP | 3253810 B2 | 04-02-2002 |
| | | | | JP | H0894019 A | 12-04-1996 |
| EP 0030253 | A2 | | 17-06-1981 | AU | 538475 B2 | 16-08-1984 |
| | | | | AU | 6049480 A | 18-06-1981 |
| | | | | CA | 1144281 A1 | 05-04-1983 |
| | | | | EP | 0030253 A2 | 17-06-1981 |
| | | | | IN | 152526 A1 | 04-02-1984 |
| | | | | JP | S5684518 A | 09-07-1981 |
| | | | | US | 4275601 A | 30-06-1981 |
| | | | | ZA | 8004272 A | 25-11-1981 |
| US 2605709 | A | | 05-08-1952 | NONE | | |

EPO FORM P0459

For more details about this annex : see Official Journal of the European Patent Office, No. 12/82

8